Europäisches Patentamt

European Patent Office

Office européen des brevets

(19)

(11) **EP 1 153 340 B1**

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(51) Int Cl.7: **G05D 23/27**

(21) Anmeldenummer: **00903679.9**

(22) Anmeldetag: **09.02.2000**

(86) Internationale Anmeldenummer:
**PCT/EP00/01047**

(87) Internationale Veröffentlichungsnummer:
**WO 00/48051 (17.08.2000 Gazette 2000/33)**

(54) **VERFAHREN ZUR REGELUNG EINES HOCHTEMPERATUR-GASPHASEN-PROZESSES UND VERWENDUNG DES VERFAHRENS**

METHOD OF REGULATING A HIGH TEMPERATURE GASEOUS PHASE PROCESS AND USE OF SAID METHOD

PROCEDE DE REGULATION D'UN PROCESSUS EN PHASE GAZEUSE A HAUTE TEMPERATURE ET UTILISATION DU PROCEDE

(84) Benannte Vertragsstaaten:
**BE DE FR GB IT NL**

(30) Priorität: **10.02.1999 DE 19905480**
**20.04.1999 DE 19917821**

(43) Veröffentlichungstag der Anmeldung:
**14.11.2001 Patentblatt 2001/46**

(73) Patentinhaber: **Schunk Kohlenstofftechnik GmbH**
**D-35452 Heuchelheim (DE)**

(72) Erfinder: **SCHNEWEIS, Stefan**
**D-61279 Grävenwiesbach (DE)**

(74) Vertreter:
**Stoffregen, Hans-Herbert, Dr. Dipl.-Phys.**
**Patentanwalt**
**Postfach 21 44**
**63411 Hanau (DE)**

(56) Entgegenhaltungen:
| | |
|---|---|
| **EP-A- 0 549 207** | **EP-A- 0 764 457** |
| **EP-A- 0 803 725** | **US-A- 5 014 217** |
| **US-A- 5 060 572** | **US-A- 5 776 254** |
| **US-A- 5 807 750** | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Regelung eines Hochtemperatur-Gasphasen-Prozesses, insbesondere CVD, LPCVD (Low Pressure Chemical Vapour Deposition) oder CVI, unter Zugrundelegung von mittels Infrarot-Spektroskopie ermittelter Messkurve, die zumindest einen für die Regelung des Prozesses charakteristischen vom Untergrund der Messkurve abweichenden Spektralbereich (Peak) aufweist.

Üblicherweise besitzen chemische Verbindungen hochspezifizierte Infrarot-Spektren, die feiner strukturiert als Spektren im Sichtbaren oder Ultravioletten sind. Daher dienen Infrarot-Spektren häufig als Hilfsmittel der qualitativen Analyse bei der Identifizierung chemischer Verbindungen, wobei ein gemessenes Spektrum, das die interessierenden chemischen Verbindungen beinhaltet, mit einem sogenannten Referenzspektrum verglichen und durch Quotientenbildung/Division der Spektren wiederum Absorptionsspektren gewonnen werden, die über die zu überprüfenden chemischen Verbindungen Aussagen ermöglichen.

Da die für die chemischen Verbindungen charakteristischen Spektralbereiche, d. h. Peaks sich in Abhängigkeit von der Temperatur stark verändern, ist es erforderlich, dass für jede Temperatur, bei der ein Prozess durchgeführt wird, eine Referenzkurve ermittelt wird. Gleiches gilt, wenn Infrarot-Spektren in unterschiedlichen Anlagen gemessen und ausgewertet werden sollen.

Aus der US 5,175,017 bzw. JP 07-90593 A bzw. JP 03-193863 A sind Prozessregelungen mittels EDV-Auswertung von Spektrometerwerten bekannt. Einen Überblick über Prozessregelmöglichkeiten, die auch die Spektroskopie einschließen, sind der US-Z: J. Vak.Sci.Technol. B13 (4) Jul/Aug. 1995, 1917 - 1923, zu entnehmen. Die US 4,148,931 schlägt eine Prozessregelung über IR-Spektroskopie im Abgasstrom vor.

Aus der US 5,060,572 ist ein Verfahren zur Regelung eines Trocknungsprozesses einer bedruckten Stoffbahn bekannt. In einer Trockenvorrichtung ist ein Infrarotstrahlungsgang vorgesehen, um Konzentrationen von Gasdämpfen mittels eines Extensionsverfahrens zu bestimmen. Dies geschieht unter Zugrundelegung einer mittels Infrarot-Spektroskopie ermittelten Messkurve, die einen für die Regelung des Prozesses charakteristischen Spektralbereich aufweist. Zur Regelung des Prozesses wird einerseits vorgeschlagen, die gemessene Kurve mit einer Intensität von im Wesentlichen konstantem Wert zu vergleichen oder eine Referenzlinie zu verwenden, die als Basislinie durch Punkte mit maximalem Transmissionsgrad verläuft. Die Berücksichtigung wenig ausgeprägter charakteristischer Spektralbereiche (Peaks) der ermittelten Messkurve ist durch das Verfahren gemäß der US 5,060,572 nicht beschrieben.

Die EP 0 549 207 A 1 bezieht sich auf eine Vorrichtung und ein Verfahren zur Steuerung der Bildung von großflächigen Diamantfilmen bei der Verwendung von erhitzten feuerfesten Materialien wie beispielsweise Graphit oder Carbon, die in Form von Stäben, Gittern oder Körben geformt sind. Aus der EP 0 549 207 A 1 ist die Verwendung von Graphit zur Emittierung von IR-Strahlung bekannt.

Die US 5,807,750 bezieht sich auf ein Analysegerät zur optischen Analyse von Substanzen und offenbart die Messung einer IR-Strahlung in einem Abgaskanal.

Schließlich ist aus EP 0 764 457 A 2 eine Vorrichtung und ein Verfahren zur Verhinderung der Bildung von Dioxinen in Abgasen einer Müllverbrennungsanlage beschrieben.

Der vorliegenden Erfindung liegt das Problem zu Grunde, ein Verfahren der eingangs genannten Art so weiterzubilden, dass mit der Infrarot-Spektroskopie Hochtemperatur-Gasphasen-Prozesse, insbesondere CVD-, LPCVD- und CVI-Prozesse, auch bei sich während des Prozesses ändernden Temperaturen optimal und schnell derart geregelt werden können, dass der Gasphasen-Prozess optimiert bzw. der Anfall von insbesondere gefährdenden chemischen Verbindungen im Abgas reduziert wird.

Erfindungsgemäß wird das Problem im Wesentlichen dadurch gelöst, dass für jeden charakteristischen Spektralbereich (Peak) unmittelbar aus der Messkurve unter Zugrundelegung von Anfangs- und Endwerten des Peaks eine Gerade (synthetischer Hintergrund) berechnet wird und dass die Regelung des Prozesses durch Integration des Peaks über der Geraden oder durch Bestimmung der maximalen Höhe des Peaks über der Geraden oder unter Zugrundelegung einer anderen charakteristischen Größe des Peaks zur Geraden erfolgt.

Dabei ist insbesondere vorgesehen, dass die Messkurve vor Berechnung der Geraden geglättet, also das Rauschen stark minimiert wird. Dabei kann die Glättung nach der von Kinitz aufgestellten Formel

$$A_i = \frac{1}{16} \left( A_{(i-2)} + 4\, A_{(i-1)} + 6\, A_{(i)} + 4\, A_{(i+1)} + A_{(i+2)} \right)$$

erfolgen, wobei $A_i$ der zu glättende Wert (d. h. im vorliegenden Fall der Peak) und $A_{(i-x)}$ bzw. $A_{(i+x)}$ die Werte vor bzw. hinter dem Wert $A_i$ bedeuten.

Durch die erfindungsgemäße Lehre wird eine kontinuierliche Aufnahme und Auswertung von Infrarot-Spektren unabhängig von einem sich mit der Temperatur ändernden spektralen Hintergrund ermöglicht, so dass unter Vermeidung eines Referenzspektrums bei jeweils zu messender Temperatur ein Regeln des Prozesses ermöglicht wird. Somit können unmittelbar nach der Berechnung der Geraden, die einem synthetischen Hintergrund gleichkommt, aufgrund zwischen der Geraden und dem Peak sich ergebender charakteristischer Werte relevante Parameter des Prozesses geregelt werden. Hierzu gehören Druck im Reaktionsbehälter, Gasgeschwindigkeiten des Prozessgases, deren Konzentration und/oder Temperatur im Reaktionsraum selbst.

Aufgrund der erfindungsgemäßen Lehre ist es nicht mehr erforderlich, nach Umbauten, beim Übergang zu anderen Prozessanlagen und insbesondere anderen bzw. sich verändernden Temperaturen vor dem eigentlichen Messen sogenannte Hintergrunddatenbanken für die verschiedenen Temperaturen anzulegen, um durch so gewonnene Referenzkurven die tatsächlich gemessenen Messkurven zu dividieren. Somit kann ohne jegliche Anpassung auch während eines laufenden Prozesses die Gaszusammensetzung bestimmt werden. Dies ist insbesondere dann der Fall, wenn die Lage der charakteristischen Spektralbereiche, also die Leit-Peaks bekannt sind, so dass infolgedessen parameterunabhängig und auch unabhängig von den durchzuführenden Hochtemperaturgasphasen-Prozessen eine unmittelbare Auswertung und damit Regelung des Prozesses erfolgen kann. Auf diesem Wege können problemlos PyC- oder CVD-, LPCVD- oder CVI-Anlagen z.B. für PyC- oder SiC-Beschichtungen optimiert bzw. kontrolliert werden.

Insbesondere kann das erfindungsgemäße Verfahren zur Regelung eines Abfall- wie Müllverbrennungsprozesses zur Anwendung gelangen, wobei als Regelgröße ein für ein umweltschädliches Gas wie Dioxin charakteristischer Spektralbereich der Messkurve zugrundegelegt wird.

Bei einem CVD-Prozess (Chemical Vapor Deposition) zur Oberflächenbeschichtung von z. B. Kohlenstoff- bzw. Graphitmaterial mit Siliziumcarbid (SiC) können als Regelgröße vorzugsweise im Abgasstrom gemessene charakteristische Peaks wie HCl und/oder $CH_4$ und/oder $CH_3SiCl_3$ und/oder $HSiCl_3$ und/oder $SiCl_2$ und/oder $SiCl_4$ zugrundegelegt werden.

Zur Bestimmung der Messkurve kann von einem in einem Reaktionsbehälter vorhandenem Element wie Graphitplatte emittierte IR-Strahlung gemessen werden, wobei insbesondere die durch einen Abgasstrom des Reaktionsbehälters emittierte IR-Strahlung zugrundegelegt wird. Auf diese Weise kann durch Einstellung der Prozessparameter sichergestellt werden, dass z. B. die Menge an Polychlorsilanen im Abgas in einem Umfang reduziert wird, dass aufwendige Nachbehandlungen vermieden werden. Auch kann die Abscheiderate geregelt werden, so dass infolgedessen der CVD-Prozess mittels des erfindungsgemäßen Verfahrens optimiert wird. Gleiches gilt zur Optimierung von CVI (Chemical Vapor Infiltration)-Prozessen und Pyrographit-Beschichtungen (PyC).

Das erfindungsgemäße Verfahren ist jedoch nicht nur auf Infrarot-Messungen beschränkt, bei der die Strahlung von einem Körper emittiert wird. Vielmehr sind sämtliche bekannten Infrarot-Spektroskopie-Verfahren anwendbar, mit denen Emissions-, Transmissions- oder Reflektionsspektren aufgenommen werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

Fig. 1 eine Einstrahl/Infrarot-Messkurve,

Fig. 2 eine Messkurve mit synthetischem Hintergrund,

Fig. 3 ein aus der Messkurve nach Fig. 2 berechnetes Absorptionsspektrum unter Zugrundelegung des synthetischen Hintergrundes,

Fig. 4 Änderungen von Absorptionslinien in Abhängigkeit der Temperatur bei einem CVD-Prozess zur Beschichtung von Kohlenstoff- bzw. Graphitmaterial mit SiC,

Fig. 5 einen Ausschnitt eines Reaktionsbehälters und

Fig. 6 ein Blockschaltbild.

Um z. B. Kohlenstoff- bzw. Graphitmaterial mit Siliziumcarbid (SiC) zu beschichten, kann ein thermisches CVD (Chemical Vapor Deposition)-Verfahren benutzt werden, wobei z. B. $SiHCl_3$ oder $SiCl_4$ in $H_2$-Atmosphäre bei 900° C bis 1350°C in einem Reaktionsraum reduziert werden und durch Abscheidung auf dem Substrat sich eine SiC-Schicht ausbildet. Auch können Trichlorsilan $CH_3SiCl_3$ (MTS) oder $SiH_4$ und Methan $CH_4$ anstelle von MTS eingesetzt werden. Insoweit wird jedoch auf hinlänglich bekannte CVD-Verfahren zum Abscheiden von SiC verwiesen.

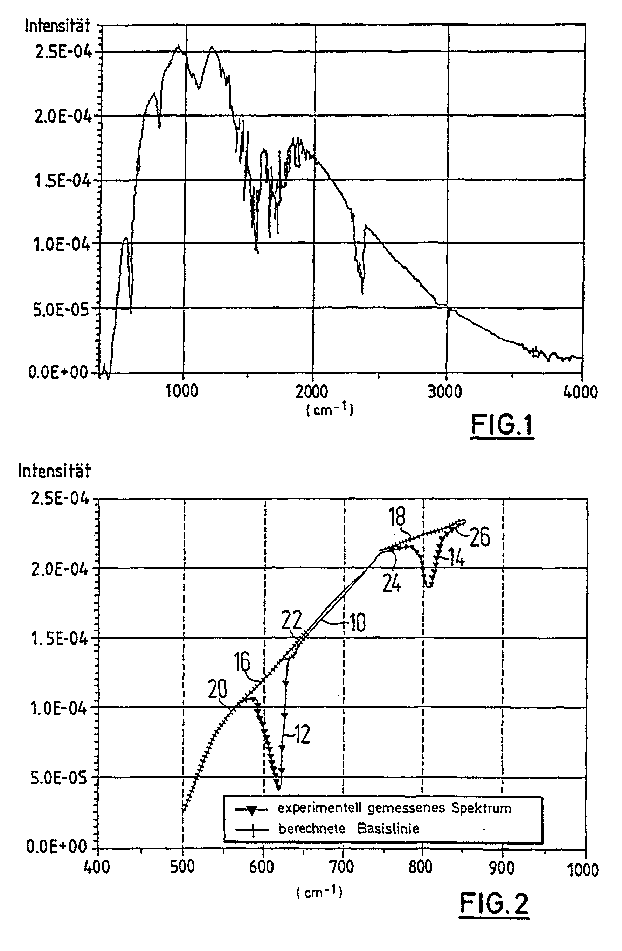

Eine mittels FTIR (Fourier-Transform-IR-Spektrometrie)-Messung aufgenommene Messkurve ist in Fig. 1 dargestellt. Dabei ist die Intensität gegenüber der Wellenzahl $cm^{-1}$ aufgetragen. Selbstverständlich kann die Wellenzahl auch die Wellenlänge oder die Frequenz ersetzt werden.

Aus der Messkurve gemäß Fig. 1 erkennt man, dass diese charakteristische Spektralbereiche, sogenannte Peaks enthält, die für bestimmte chemische Verbindungen charakteristisch sind. Die Lage dieser Peaks ist bekannt, so dass aufgrund der Veränderung dieser der CVD-Prozess geregelt werden kann. Nach dem Stand der Technik wird hierzu die bei einer bestimmten Temperatur gemessene Messkurve mit einer Referenzmesskurve bei gleicher Temperatur verglichen, bei der der CVD-Prozess nicht abläuft. Aus dem Quotienten der Kurven werden sodann charakteristische Werte der Peaks ermittelt, um Aussagen über den Prozess treffen zu können.

Ändert sich bei einem Prozess die Temperatur, so ist es erforderlich, für jede Temperatur eine gesonderte Referenzkurve, eine sogenannte Hintergrundkurve mit der tatsächlich gemessenen Messkurve zu vergleichen, so dass infolgedessen eine umfangreiche Hintergrunddatenbank zur Verfügung stehen muss. Auch bei Anlagenwechseln ist es erforderlich, jeweils charakteristische Hintergrund- also Referenzkurven zur Verfügung zu haben.

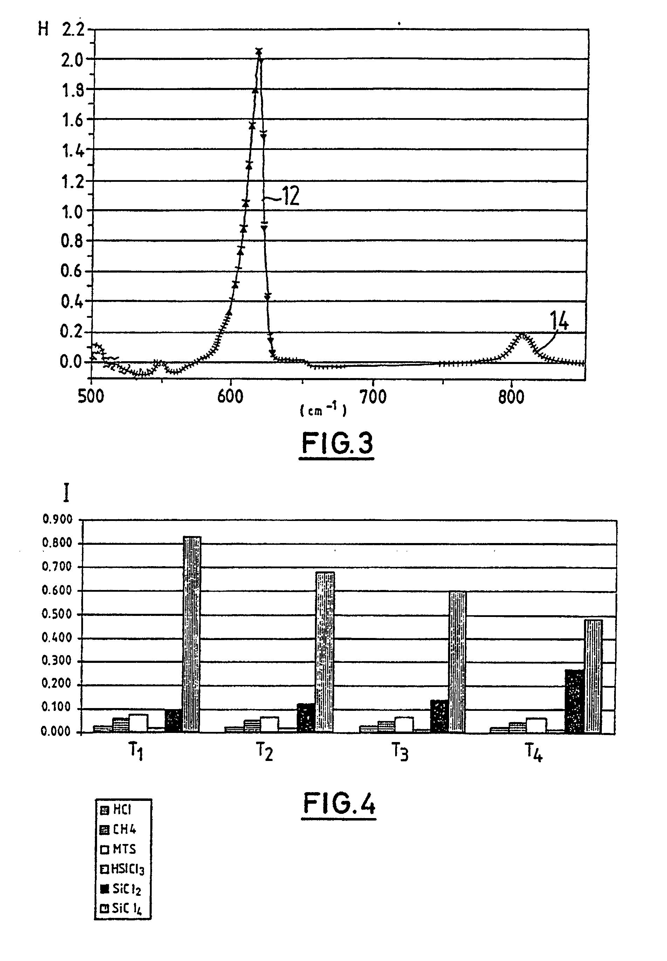

In Fig. 4 ist beispielhaft die Veränderung charakteristischer Peaks bei einem CVD-Verfahren zur Beschichtung von Kohlenstoff bzw. Graphit mit SiC für die chemischen Verbindungen HCl, $Cl_4$, Methyltrichlorsilan (MTS), $HSiCl_3$, $SiCl_2$ und $SiCl_4$ dargestellt. Man erkennt, dass z. B. der für HCl charakteristische Peak mit zunehmender Temperatur ($T_1 < T_2 < T_3 < T_4$) abnimmt, wohingegen die Intensität für $SiCl_2$ zunimmt.

Erfindungsgemäß ist vorgesehen, dass es nicht mehr erforderlich ist, gesonderte Hintergrundmessungen durchzuführen, also Referenzkurven abzuspeichern, um mit den tatsächlichen Messkurven zu vergleichen. Vielmehr wird ein sogenannter synthetischer Hintergrund aus der tatsächlich gemessenen Messkurve berechnet und dieser zur Bestimmung einer charakteristischen Größe des zu überprüfenden spektralen Bereichs, also der Peaks zugrundegelegt, um Absorptionsspektren zu erhalten, die zur unmittelbaren Regelung des Prozesses benutzt werden können.

So ist in Fig. 2 eine experimentell gemessene Messkurve 10 dargestellt, wobei die Intensität über der Wellenzahl aufgetragen ist. Die Messkurve 10 umfasst zwei charakteristische Peak 12 und 14, die zur Steuerung bzw. Regelung des Prozesses genutzt werden sollen. Hierzu werden vor und hinter dem jeweiligen Peak 12, 14 Messpunkte 20, 22, 24, 26, vorzugsweise jeweils 6 Messpunkte, berücksichtigt, an denen eine Gerade 16, 18 berechnet wird, die ihrerseits einem synthetischen Hintergrund gleichkommt, also einem Hintergrund einer Referenzmessung entspricht, die bei der der Messkurve gemäß Fig. 2 zugrundeliegenden Temperatur der entsprechenden Anlage aufgenommen und abgespeichert worden wäre.

Aus dem Quotienten zwischen den Geraden 16, 18 und den Peaks 12, 14 wird sodann ein Absorptionsspektrum berechnet, welches der Fig. 3 zu entnehmen ist. In dieser ist die Höhe der der Fig. 2 zu entnehmenden Peaks 12, 14 gegenüber der Wellenzahl aufgetragen. Aus dem Absorptionspeak 12, 14 kann sodann eine Prozessregelung erfolgen, wobei z. B. bei der Beschichtung von Kohlenstoff bzw. Graphit mit SiC als charakteristische Peak der des $SiCl_4$ (Siliciumchlorid) benutzt werden kann, und zwar derart, dass in einem Abgasstrom minimale Werte vorliegen.

Vor der Berechnung des synthetischen Hintergrundes, der durch die Linien 16, 18 repräsentiert wird, kann die Messkurve 10 geglättet werden, und zwar nach der Formel

$$A_i = \frac{1}{16} \left( A_{(i-2)} + 4\, A_{(i-1)} + 6\, A_{(i)} + 4\, A_{(i+1)} + A_{(i+2)} \right)$$

wobei $A_i$ der zu glättende Wert, also der der Peaks 12, 14 und $A_{(i-x)}$ bzw. $A_{(i+x)}$ die Einzelmesswerte 20, 22, 24, 26 direkt vor und hinter dem zu glättenden Wert sind. Vorzugsweise werden jedenfalls 3 Werte vor und 3 Werte hinter dem jeweiligen zu glättenden Wert benutzt, die in Fig. 2 beispielhaft mit den Bezugzeichen 20, 22 bzw. 24, 26 bezeichnet sind.

Voraussetzung für dieses Verfahren ist selbstverständlich, dass die der Messkurve 10 zu entnehmenden Peaks eindeutig bestimmten chemischen Verbindungen zuzuordnen sind. Sind die entsprechenden als Leitpeaks zu bezeichnenden Spektralbereiche bekannt, kann aus den auszuwertenden Leitpeaks eine unmittelbare Regelung des Prozesses unabhängig von der zum Einsatz gelangenden Anlage erfolgen. Somit können problemlos PyCoder CVD-, LPCVD- oder CVI-Anlagen z.B. zur PyC- oder SiC-Beschichtung optimiert bzw. kontrolliert werden.

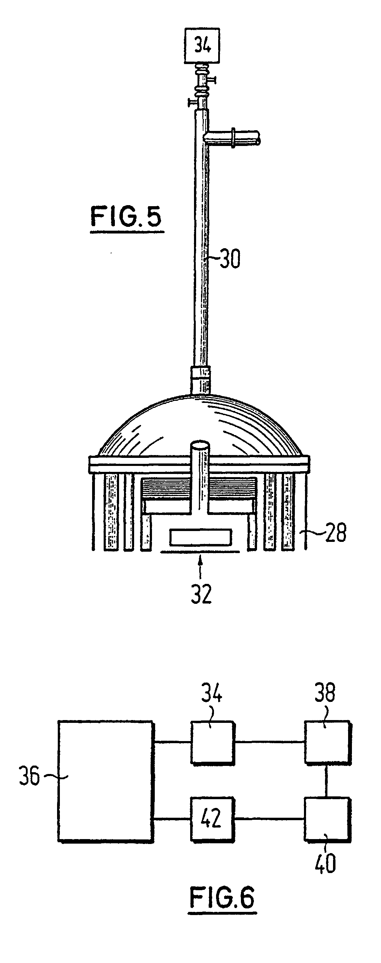

In Fig. 5 ist im Ausschnitt ein Reaktionsraum 28 dargestellt, in dem ein nicht dargestelltes Substrat aus Kohlenstoff bzw. Graphit mit SiC beschichtet werden soll. Hierzu wird der Reaktionsraum 28 auf eine Temperatur T von z. B. 1300° C bei einem Druck von z. B. < 13,33 x $10^3$ Pa eingestellt. Ferner wird in den Reaktionsraum 28 im gewünschten Umfang Silan wie Methyltrichlorsilan und Wasserstoff eingeführt, um auf dem Graphit bzw. Kohlenstoffsubstrat SiC abzuscheiden.

Um das Abscheiden von Silan auf dem Substrat und damit die Ausbildung von Siliziumcarbid bzw. den Anteil von explosiven Polychlorsilan im Abgas zu bestimmen, befindet sich unterhalb eines Abgasrohres 30 ein die Temperatur des Reaktionsraums annehmender Körper wie Graphitplatte 32, dessen durch das Abgasrohr 30 emittierte IR-Strahlung von einem FTIR-Spektrometer 34 gemessen wird. Aus der Messkurve wird sodann nach dem erfindungsgemäßen Verfahren ein synthetischer Hintergrund im Bereich der charakteristischen Peaks 12, 14 ermittelt, um sodann Absorptionsspektren gemäß Fig. 3 zu berechnen und aus diesen den Prozess zu steuern. Selbstverständlich könnte aus den Messkurven selbst nach Berechnen der Linien 16, 18 Werte zur Regelung des Prozesses abgeleitet werden.

Durch das erfindungsgemäße Verfahren werden folglich aus der Messkurve 10 Peaks 12, 14 "herausgeschnitten", aus den Anfangs- und Endwerten 20, 22, 24, 26 der Peaks 12, 14 Geradengleichungen bestimmt, damit mit deren Hilfe der theoretische Hintergrund im Bereich der Peaks 12, 14 berechnet wird. Durch Quotientenbildung zwischen dem synthetischen Hintergrund 16, 18 und den experimentell bestimmten Peaks 12, 14 werden sodann Peakhöhe bzw. Peakfläche bestimmt. Dabei wird für jeden Peak ein eigener Hintergrund berechnet, wobei nur die unmittelbar am Anfang und am Ende des Peaks 12, 14 vorhandenen tatsächlich gemessenen Werte zur Bestimmung der Geraden 16, 18 zugrundegelegt werden.

Durch das erfindungsgemäße Verfahren ist eine kontinuierliche Aufnahme und Auswertung von Infrarot-Spektren unabhängig von einem sich mit der Temperatur ändernden spektralen Hintergrund möglich. Somit ist auf der Basis des experimentell tatsächlich gemessenen Spektrums eine Regelung des Prozesses selbst möglich. Unmittelbar in Abhängigkeit von den ermittelten Werten, die einer Online-Auswertung gleichkommen, sind sodann sämtliche relevante Parameter wie Kesseldruck, Gasgeschwindigkeit, Konzentration der Prozessgase und Temperatur regel- bzw. steuerbar.

Die erfindungsgemäße Lehre ermöglicht es, dass nach Umbauten bzw. beim Wechsel von Anlagen oder Änderung von Temperaturen die nach dem Stand der Technik erforderlichen Hintergrunddatenbanken nicht zur Verfügung stehen müssen, die vor den eigentlichen Messungen vorliegen müssen. Ohne jede Anpassung kann somit während eines laufenden Verfahrens wie Beschichtung die Gaszusammensetzung bestimmt werden und somit das Verfahren gesteuert werden.

Erwähntermaßen ist das erfindungsgemäße Verfahren für alle insbesondere Hochtemperatur-Gasphasen-Prozesse einsetzbar, also auch bei CVI (Chemical Vapor Infiltration)-Prozessen wie Pyrographit-Beschichten einsetzbar, wobei eine optimale Abscheiderate sichergestellt werden kann, ohne dass sich die Struktur des Pyrographit ändert. Somit ist aufgrund der erfindungsgemäßen Lehre problemlos die Möglichkeit gegeben, Online-Prozesse zur Behandlung von Hochtemperaturwärmetauscher-Proben zu steuern, wobei reproduzierbare Ergebnisse erzielbar sind.

Das erfindungsgemäße Verfahren kann jedoch auch in anderen Bereichen, insbesondere im Bereich der Abfall- wie Müllverbrennung zum Einsatz gelangen. So können aufgrund der erfindungsgemäßen Lehre die Spektralbereiche beobachtet werden, die umweltschädlichen Gasen wie Dioxin entsprechen, um aufgrund des Peaksverlaufs den Prozess zu stören, also z. B. die Temperatur dann zu erhöhen, wenn aufgrund des Peaks der Anteil des Dioxin als unzulässig bewertet wird.

In Fig. 6 ist ein Blockschaltbild dargestellt. So wird mit einem FTIR-Spektrometer 34 ein für einen Reaktionsraum 36 charakteristisches Infrarot-Spektrum mit Peaks bestimmt, um in einer Auswerteeinheit 38 einen synthetischen Hintergrund durch Berechnung einer Gerade aus vor und hinter dem jeweiligen Peak liegenden Messwerten zu bestimmen. Aus sich zwischen jeweiligen Geraden und Peak errechnetem charakteristischen Wert wie Fläche (Integral) oder Peakhöhe werden über eine Steuer-/Regeleinheit 40 Prozessparameter in dem Reaktionsraum 36 geregelt. Hierzu können über die Steuer-/Regeleinheit 40 mit 42 bezeichnete Einheiten zur Änderung der Temperatur in dem Reaktionsraum 36, des Drucks in dem Reaktionsraum 36 oder der Anteil der Prozessgase angesteuert werden.

**Patentansprüche**

1. Verfahren zur Regelung eines Hochtemperatur-Gasphasen-Prozesses, insbesondere CVD, LP-CVD oder CVI, unter Zugrundelegung einer mittels Infrarot-Spektroskopie ermittelten Messkurve, die zumindest einen für die Regelung des Prozesses charakteristischen vom Untergrund der Messkurve abweichenden Spektralbereich aufweist,
**dadurch gekennzeichnet,**
**dass** für jeden charakteristischen Spektralbereich unmittelbar aus der Messkurve unter Zugrundelegung von Anfangs- und Endwerten des Peaks eine Gerade berechnet wird und dass die Regelung des Prozesses durch Integration des Peaks über der Geraden oder durch Bestimmung der maximalen Höhe des Peaks über die Geraden oder unter Zugrundelegung einer anderen charakteristischen Größe des Peaks zur Geraden erfolgt.

2. Verfahren nach Anspruch 1,
**dadurch gekennzeichnet,**
**dass** die Regelung des Prozesses durch fortwährende Aufnahme und Auswertung von Messkurven erfolgt.

3. Verfahren nach Anspruch 1 oder 2,
**dadurch gekennzeichnet,**
**dass** eine Online-Auswertung des oder der Peaks zur Einstellung von Prozessparametern wie Druck, Temperatur, Geschwindigkeit oder Konzentration von Prozessgasen erfolgt.

4. Verfahren nach zumindest einem der vorhergehenden Ansprüche,
**dadurch gekennzeichnet,**
**dass** die Auswertung der Messkurve ohne Zugrundelegung einer Referenzmessung bei einer Temperatur erfolgt, die der des zu regelnden Prozesses entspricht.

5. Verfahren nach zumindest einem der vorhergehenden Ansprüche,
**dadurch gekennzeichnet,**
**dass** X-Anfangswerte und Y-Endwerte eines Peaks zur Berechnung der Geraden benutzt werden, wobei vorzugsweise X = Y ist.

6. Verfahren nach Anspruch 5,
**dadurch gekennzeichnet,**
**dass** 5 bis 7, insbesondere 6 Anfangswerte und 5 bis 7, insbesondere 6 Endwerte des Peaks zur Berechnung der Geraden zugrunde gelegt werden.

7. Verfahren nach zumindest einem der vorhergehenden Ansprüche,
**dadurch gekennzeichnet,**
**dass** die Messkurve durch von einem in einem Reaktionsraum vorhandenen Element wie Graphit-Platte emittierte IR-Strahlung bestimmt wird.

8. Verfahren nach Anspruch 7,
   **dadurch gekennzeichnet,**
   **dass** die durch einen Abgaskanal des Reaktionsraums emittierte IR-Strahlung des Elementes gemessen wird.

9. Verwendung des Verfahrens nach zumindest einem der Ansprüche 1 bis 8 zur Regelung eines CVD-Prozesses zur Oberflächenbeschichtung von Kohlenstoffoder Graphitmaterial mit SiC, wobei als Regelgröße mindestens ein vorzugsweise im Abgasstrom gemessener charakteristischer Peak für HCl und/oder $CH_4$ und/oder $CH_3SiCl_3$ und/oder $HSiCl_3$ und/oder $SiCl_2$ und/oder $SiCl_4$ zugrundegelegt wird.

10. Verwendung des Verfahrens nach zumindest einem der Ansprüche 1 bis 8 zur Regelung eines Abfall- oder Müllverbrennungsprozesses, wobei als Regelgröße mindestens ein für ein umweltschädliches Gas wie Dioxin charakteristischer Peak der Messkurve zugrundegelegt wird.

**Claims**

1. Method of regulating a high temperature gas phase process, in particular CVD, LPCVD or CVI, on the basis of a measurement curve obtained by means of infrared spectroscopy, the curve having at least one spectral region which is characteristic for the regulation of the process and which deviates from the background of the measurement curve,
   **characterized in**
   **that** for each characteristic spectral region a straight line is calculated directly from the measurement curve on the basis of initial and end values of the peak and in that the regulation of the process takes place by integration of the peak over the straight line or by determination of the maximum height of the peak over the straight line or on the basis of another characteristic value of the peak line relative to the straight line.

2. Method according to claim 1,
   **characterized in**
   **that** the regulation of the process takes place by continuos establishment and evaluation of measurement curves.

3. Method according to claim 1 or 2,
   **characterized in**
   **that** an on-line evaluation of the peak or peaks is effected for adjustment of process parameters such as pressure, temperature, speed or concentration of process gases.

4. Method according to at least one of the preceding claims,
   **characterized in**
   **that** the evaluation of the measurement curve takes place without being based on a reference measurement at a temperature which corresponds to that of the process to be regulated.

5. Method to at least one of the preceding claims,
   **characterized in**
   **that** X initial values and Y end values of a peak are used for calculation of the straight line, X preferably being equal to Y.

6. Method according to claim 5,
   **characterized in**
   **that** 5 to 7, in particular 6 initial values and 5 to 7, in particular 6 end values of the peak are used as a basis for the calculation of the straight line.

7. Method according to at least one of the preceding claims,
   **characterized in**
   **that** the measurement curve is determined by IR radiation emitted from an element, such as graphite plate, present in a reaction chamber.

8. Method according to claim 7,
   **characterized in**
   **that** the IR radiation of the element, emitted through an exhaust channel of the radiation chamber, is measured.

9. Application of the method according to at least one of the claims 1 to 8 for regulating a CVD process for surface coating of carbon or graphite material with SiC, whereby at least one peak preferably measured in the exhaust gas stream, characteristic for HCl and/or $CH_4$ and/or $CH_3SiCl_3$ and/or $HSiCl_3$ and/or $SiCl_2$ and/or $SiCl_4$ is used as a basis for regulating values.

10. Application of the method according to at least one of the claims 1 to 8 for regulating a waste or refuse incineration process, whereby at least one peak, which is characteristic of an environmentally dangerous gas such as dioxin, of the measurement curve being used as a basis for the regulating values.

**Revendications**

1. Procédé de régulation d'un procédé en phase gazeuse à haute température, notamment un procédé CVD, LPCVD ou CVI, basé sur une courbe de mesure obtenue par spectrographie infrarouge, cette courbe ayant au moins une plage spectrale qui diffère de manière caractéristique du fond de la courbe de mesure pour la régulation du procédé,
**caractérisé en ce que**
pour chaque plage spectrale ou pic caractéristique, on calcule une droite directement à partir de la courbe de mesure et en utilisant les valeurs initiales et finales du pic et
la régulation du procédé se fait par intégration du pic au-dessus de la droite ou en déterminant l'amplitude maximale du pic au-dessus de la droite ou en s'appuyant sur une autre grandeur caractéristique du pic par rapport à la droite.

2. Procédé selon la revendication 1,
   **caractérisé en ce que**
   la régulation du procédé se fait par la saisie et l'exploitation en continu de courbes de mesure.

3. Procédé selon l'une quelconque des revendications 1 ou 2,
   **caractérisé en ce qu'**
   on effectue une exploitation en ligne du ou des pics pour régler les paramètres du procédé tels que la pression, la température, la vitesse ou la concentration des gaz du procédé.

4. Procédé selon au moins l'une quelconque des revendications précédentes,
   **caractérisé en ce qu'**
   on exploite la courbe de mesure sans s'appuyer sur une mesure de référence à une température qui correspond à celle du procédé à réguler.

5. Procédé selon l'une quelconque des revendications précédentes,
   **caractérisé en ce que**
   les valeurs initiales X et les valeurs finales Y d'un pic sont utilisées pour calculer les droites avec de préférence X = Y.

6. Procédé selon la revendication 5,
   **caractérisé en ce qu'**
   on utilise entre 5 et 7, et notamment 6 valeurs initiales et entre 5 et 7 et notamment 6 valeurs finales du pic pour calculer la droite.

7. Procédé selon l'une quelconque des revendications précédentes,
   **caractérisé en ce qu'**
   on détermine la courbe de mesure par un élément présent dans l'enceinte de réaction tel que le rayonnement infrarouge émis par une plaque de graphite.

8. Procédé selon la revendication 7,
   **caractérisé en ce qu'**
   on mesure le rayonnement infrarouge de l'élément émis par un canal de gaz d'échappement de la chambre de réaction.

9. Application du procédé selon au moins l'une quelconque des revendications 1 à 8, pour réguler un procédé CVD pour le revêtement de surfaces de matières en carbone ou en graphite telles que SiC, la grandeur de régulation s'appuyant au moins sur un pic caractéristique mesuré dans la veine de gaz d'échappement pour HCl et/ou $CH_4$ et/ou $CH_3SiCl_3$ et/ou $HSiCl_3$ et/ou $SiCl_2$ et/ou $SiCl_4$.

10. Application du procédé selon au moins l'une quelconque des revendications 1 à 8 pour réguler un procédé de combustion de déchets et d'ordures, la grandeur de régulation utilisée étant un pic caractéristique de la courbe de mesure d'un gaz polluant tel que la dioxine.

FIG.1

FIG.2

8

## FIG.3

Legend:
- HCl
- $CH_4$
- MTS
- $HSiCl_3$
- $SiCl_2$
- $SiCl_4$

## FIG.4

## FIG.5

## FIG.6